# EUROPÄISCHE PATENTANMELDUNG

(11) **EP 4 677 973 A1**
(43) Veröffentlichungstag der Anmeldung: **14.01.2026**
(21) Anmeldenummer: 25187103.4
(22) Anmeldetag: 03.07.2025
(51) Int. Cl.: A01B 1/00, A01B 19/04, A01B 23/04, A01B 63/02, A01B 61/04

(54) **LANDWIRTSCHAFTLICHE BODENBEARBEITUNGSMASCHINE**

(30) Priorität: 05.07.2024 DE 102024119134
(71) Anmelder: Pöttinger Landtechnik GmbH, 4710 Grieskirchen (AT)
(72) Erfinder: GADERMAYR, Andreas, 4710 Grieskirchen (AT); ZIERER, Martin, 4710 Grieskirchen (AT)
(74) Vertreter: Burger, Hannes Alfred

(57) **Zusammenfassung**

Die Erfindung betrifft eine landwirtschaftliche Bodenbearbeitungsmaschine (1), insbesondere Striegel (1), umfassend:
- eine Rahmenkonstruktion (2), welche eine Erstreckung in einer Bearbeitungsrichtung (7) und in einer Querrichtung (8) aufweist;
- einen ersten Striegelträger (20) mit mehreren in der Querrichtung (8) zueinander beabstandet angeordneten ersten Striegelzinken (21), wobei der erste Striegelträger (20) mit der Rahmenkonstruktion (2) gekoppelt ist.

Weiters ist eine erste Striegelträgererweiterung (34) mit zumindest einem ersten Erweiterungszinken (35) ausgebildet, wobei die erste Striegelträgererweiterung (34) in Verlängerung zum ersten Striegelträger (20) anordenbar ist.

## Beschreibung

Die Erfindung betrifft eine landwirtschaftliche Bodenbearbeitungsmaschine, insbesondere einen Striegel.

Eine gattungsgemäße landwirtschaftliche Bodenbearbeitungsmaschine ist aus der EP4292410A1 bekannt. Bei dieser Bodenbearbeitungsmaschine sind mehrere Vorspannelemente und/oder Rückstellelemente einzeln oder in Gruppen betätigbar. Durch die individuelle Betätigung einzelner Vorspannelemente und/oder Rückstellelemente können gezielt Bodenwerkzeuge in Eingriff mit dem Boden gebracht werden oder von dem Boden gelöst werden, um eine Bearbeitung optimal an die Feldgeometrie anpassen zu können.

Die aus der EP4292410A1 bekannte landwirtschaftliche Bodenbearbeitungsmaschine weist den Nachteil auf, dass die in einer Reihe angeordneten Zinken gemeinsam verschwenkt werden, sodass eine optimale Anpassung an die Feldgeometrie nicht möglich ist.

Grundsätzlich sind marktseitig zwei Rahmensysteme vertreten. Zum einen wird der Rahmen der Striegelfelder selbst als tragende Struktur verwendet und gibt dadurch die exakte Arbeitsbreite der Maschine vor. Anpassungen der Arbeitsbreite sind nur durch Rahmenänderungen möglich.

Im zweiten System sind die Rahmen der Striegelfelder und der Klapprahmen getrennt. Die einzeln aneinandergereihten Stiegelfelder ergeben schlussendlich die Arbeitsbreite. Beispielsweise kann ein Striegel eine Arbeitsbreite von 12m aufweisen: hier werden 6 Standardstriegelfelder mit 144cm (48 Zinken, 8 Zinken pro Reihe bei 6 Reihen) und 2 Striegelfelder mit 162cm (54 Zinken, 9 Zinken pro Reihe bei 6 Reihen) verwendet. Ein Standardzinkenfeld hat immer pro Reihe die gleiche Anzahl an Zinken und so können beliebig mehrere Zinkenfelder aneinandergereiht werden und dabei bleibt der Zinkenstrichabstand von 3cm gleich. Rechnerisch ergibt diese Anordnung der Striegelfelder 6x144cm + 2x162cm eine Breite von 1188cm.

Moderne Ackerbausysteme sind aber an exakte Arbeitsbreiten gekoppelt. So nutzen beispielsweise konventionelle Landwirte oftmals 24m Fahrgassen und passen deren Systeme daran an. Sprich Maschinen wie Spritze, Sämaschine, Bodenbearbeitung, Stiegel, usw. haben entweder genau 24m oder einen Teiler aus 24m an Arbeitsbreite. Mit Echtzeitkinematik GPS und einer exakten Arbeitsbreite der Maschine lässt sich dann gewährleisten, dass die Felder flächig aber nicht doppelt bearbeitet werden. Dies bedeutet, dass der Striegel eine exakte Arbeitsbreite von 12m und nicht 11,88m aufweisen muss.

Möchte man nun bei den obig beschriebenen Striegelfeldern eine exakte Arbeitsbreite erreichen, müssten die beiden äußeren Striegelfelder angepasst werden, was die Komplexität einer Modellreihe wesentlich erhöht, da immer die kompletten äußeren Striegelfelder angepasst werden müssen. Eine Änderung der Arbeitsbreite einer bestehenden landwirtschaftlichen Bodenbearbeitungsmaschine ist zudem aus wirtschaftlicher Sicht nicht sinnvoll.

Aufgabe der vorliegenden Erfindung war es, die Nachteile des Standes der Technik zu überwinden und eine verbesserte landwirtschaftliche Bodenbearbeitungsmaschine zur Verfügung zu stellen, welche möglichst einfach und effektiv anpassbar ist.

Diese Aufgabe wird durch eine Vorrichtung und ein Verfahren gemäß den Ansprüchen gelöst.

Erfindungsgemäß ist eine landwirtschaftliche Bodenbearbeitungsmaschine, insbesondere Striegel, ausgebildet. Die landwirtschaftliche Bodenbearbeitungsmaschine umfasst:
- eine Rahmenkonstruktion, welche eine Erstreckung in einer Bearbeitungsrichtung und in einer Querrichtung aufweist;
- einen ersten Striegelträger mit mehreren in der Querrichtung zueinander beabstandet angeordneten ersten Striegelzinken, wobei der erste Striegelträger mit der Rahmenkonstruktion gekoppelt ist.

Eine erste Striegelträgererweiterung ist mit zumindest einem ersten Erweiterungszinken ausgebildet, wobei die erste Striegelträgererweiterung in Verlängerung zum ersten Striegelträger anordenbar ist.

Die erfindungsgemäße landwirtschaftliche Bodenbearbeitungsmaschine bringt den Vorteil mit sich, dass die Arbeitsbreite einfach an die Erfordernisse angepasst werden kann.

Die Rahmenkonstruktion kann mehrere Bauteile umfassen.

In einer ersten Ausführungsvariante kann vorgesehen sein, dass die Rahmenkonstruktion einen Hauptrahmen umfasst. Weiters können ein erster Klapparm und ein zweiter Klapparm ausgebildet sein, welche an einer ersten Seite bzw. an einer zweiten Seite bewegbar am Hauptrahmen aufgenommen sein können. Somit kann bei verringerter Transportabmessung eine Erhöhung der Arbeitsbreite erreicht werden.

Der erste Klapparm und der zweite Klapparm selbst können jeweils mehrere Klapparmteile umfassen, welche zueinander verschwenkbar sein können. Somit kann bei verringerter Transportabmessung eine weitere Erhöhung der Arbeitsbreite erreicht werden. Beim einem in mehrere Klapparmteile unterteilten Klapparm können zumindest ein innerer Klapparmteil und ein äußerer Klapparmteil ausgebildet sein. Diese können direkt aneinander gekoppelt sein. Weiters können zwischen dem inneren Klapparmteil und dem äußeren Klapparmteil ein oder mehrere weitere Klapparmteile angeordnet sein. Der innere Klapparmteil kann mit dem Hauptrahmen gekoppelt sein. Der äußere Klapparmteil kann außenliegend angeordnet sein.

Weiters kann vorgesehen sein, dass eine Striegelträgeraufnahme ausgebildet ist, an welcher die einzelnen Striegelträger befestigt sein können. Die Striegelträgeraufnahme kann direkt am Hauptrahmen, oder an den Klapparmen angeordnet sein. Die Striegelträgeraufnahme kann auch an einem Striegelfeldrahmen angeordnet sein, wobei der Striegelfeldrahmen am Hauptrahmen, oder an den Klapparmen angeordnet sein kann.

Wenn in diesem Dokument davon gesprochen wird, dass der erste Striegelträger mit der Rahmenkonstruktion gekoppelt ist, so kann dies direkt oder indirekt mittels unterschiedlicher Bauteile erfolgen.

Weiters kann es zweckmäßig sein, wenn ein zweiter Striegelträger mit mehreren in der Querrichtung zueinander beabstandet angeordneten zweiten Striegelzinken ausgebildet ist, wobei der zweite Striegelträger mit der Rahmenkonstruktion gekoppelt ist, wobei eine zweite Striegelträgererweiterung mit zumindest einem zweiten Erweiterungszinken ausgebildet ist, wobei die zweite Striegelträgererweiterung in Verlängerung zum zweiten Striegelträger anordenbar ist, wobei im montierten Zustand der erste Erweiterungszinken und der zweite Erweiterungszinken in der Querrichtung zueinander beabstandet angeordnet sind. Dies bringt den Vorteil mit sich, dass durch diese Maßnahme eine hintereinander versetzte Anordnung der Striegelzinken erreicht werden kann.

Ferner kann vorgesehen sein, dass die erste Striegelträgererweiterung und die zweite Striegelträgererweiterung mittels einer Verbindungskonstruktion miteinander gekoppelt sind, wobei die Verbindungskonstruktion an einer vom ersten Striegelträger und zweiten Striegelträger abgewandten Seite der ersten Striegelträgererweiterung und der zweiten Striegelträgererweiterung angeordnet ist. Dies bringt den Vorteil mit sich, dass durch diese Maßnahme die Stabilität der einzelnen Striegelträgererweiterungen verbessert werden kann. Zusätzlich kann durch diese Maßnahme die Verbindungskonstruktion beidseitig als Abstreifer oder Abweiser bzw. Anfahrschutz zum Schutz der Striegelträger vor Ästen und dergleichen dienen.

Darüber hinaus kann vorgesehen sein, dass ein erster Druckfederträger mit mehreren in der Querrichtung zueinander beabstandet angeordneten ersten Druckfedern ausgebildet ist, wobei der erste Druckfederträger mit der Rahmenkonstruktion gekoppelt ist, wobei die ersten Druckfedern jeweils mit einer der ersten Striegelzinken gekoppelt sind,
wobei der erste Druckfederträger relativ zum ersten Striegelträger verschiebbar ist, um eine Vorspannung der ersten Druckfedern einzustellen
und wobei eine erste Druckfederträgererweiterung mit zumindest einer ersten Erweiterungsdruckfeder ausgebildet ist, wobei die erste Erweiterungsdruckfeder mit dem ersten Erweiterungszinken gekoppelt ist, wobei die erste Druckfederträgererweiterung in Verlängerung zum ersten Druckfederträger anordenbar ist. Dies bringt den Vorteil mit sich, dass durch diese Maßnahme erreicht werden kann, dass der Anpressdruck der Erweiterungszinken auch bei hohen Unebenheiten annähernd konstant gehalten werden kann bzw. die Bodenunebenheiten ausgeglichen werden können. Somit können im Falle von Bodenunebenheiten die einzelnen Erweiterungszinken den Unebenheiten folgen und zurückweichen.

Vorteilhaft ist auch eine Ausprägung, gemäß welcher vorgesehen sein kann, dass die Verbindungskonstruktion eine obere Verbindungsschiene und eine untere Verbindungsschiene umfasst, wobei die erste Striegelträgererweiterung und die zweite Striegelträgererweiterung mit der unteren Verbindungsschiene gekoppelt sind und wobei die erste Druckfederträgererweiterung und eine zweite Druckfederträgererweiterung mit der oberen Verbindungsschiene gekoppelt sind. Durch diese Maßnahme kann die Stabilität der einzelnen Striegelträgererweiterungen bzw. der Druckfederträgererweiterungen verbessert werden.

Gemäß einer Weiterbildung ist es möglich, dass der erste Erweiterungszinken mittels einer ersten Erweiterungszinkenhalterung schwenkbar an der ersten Striegelträgererweiterung angeordnet ist, wobei die erste Erweiterungsdruckfeder in einem Abstand zu der ersten Erweiterungszinkenhalterung mit dem ersten Erweiterungszinken gekoppelt ist. Dies bringt den Vorteil mit sich, dass durch diese Maßnahme erreicht werden kann, dass der Anpressdruck der Erweiterungszinken auch bei hohen Unebenheiten annähernd konstant gehalten werden kann bzw. die Bodenunebenheiten ausgeglichen werden können. Somit können im Falle von Bodenunebenheiten die einzelnen Erweiterungszinken den Unebenheiten folgen und zurückweichen.

Ferner kann es zweckmäßig sein, dass die Verbindungskonstruktion an einem in Bearbeitungsrichtung vorderen Ende, in der Querrichtung zum ersten Striegelträger gebogen oder gekantet ausgebildet ist oder dass
ein Anfahrschutz ausgebildet ist, welcher an der Verbindungskonstruktion an einem in Bearbeitungsrichtung vorderen Ende angeordnet ist und, in der Querrichtung zum ersten Striegelträger gebogen oder gekantet ausgebildet ist. Dies bringt den Vorteil mit sich, dass durch diese Maßnahme die Abstreiffunktion der Verbindungskonstruktion verbessert werden kann, sodass eine verbesserte Abweiswirkung von Ästen oder sonstigen Gegenständen erreicht werden kann.

Darüber hinaus kann vorgesehen sein, dass die erste Striegelträgererweiterung mittels Schrauben mit dem ersten Striegelträger gekoppelt ist. Dies bringt den Vorteil mit sich, dass die erste Striegelträgererweiterung durch diese Maßnahme einfach mit dem ersten Striegelträger gekoppelt werden kann. Darüber hinaus kann durch diese Maßnahme die erste Striegelträgererweiterung einfach wieder vom ersten Striegelträger entfernt werden, wenn diese nicht weiter benötigt wird. Darüber hinaus kann durch diese Maßnahme die Position der Striegelträgererweiterung einfach eingestellt werden.

In einer alternativen Ausführungsvariante kann vorgesehen sein, dass die erste Striegelträgererweiterung mittels einer formschlüssigen Steckverbindung mit dem ersten Striegelträger gekoppelt ist und mittels eines werkzeuglos lösbaren Sicherungselementes gegen eine Verschiebung in der Querrichtung gesichert ist. Dies bringt den Vorteil mit sich, dass eine derart ausgebildete Striegelträgererweiterung einfach verstellt werden kann. Weiters bringt dies den Vorteil mit sich, dass eine derart ausgebildete Striegelerweiterung einfach und schnell montiert und wieder demontiert werden kann.

In einer weiteren Alternative kann vorgesehen sein, dass die erste Striegelträgererweiterung mittels einer formschlüssigen Steckverbindung mit dem ersten Striegelträger gekoppelt ist und mittels eines Einstellmechanismus in der Querrichtung verschiebbar gehalten ist. Dies bringt den Vorteil mit sich, dass mittels des Einstellmechanismus die Position der Striegelträgererweiterung in Querrichtung aktiv verstellt werden kann und somit eine Anpassung der Position der Striegelträgererweiterung relativ zum Striegelträger ermöglicht wird. Beispielsweise ist es denkbar, dass die Striegelträgererweiterung für den Transport zur Mitte der Bodenbearbeitungsmaschine hin verschoben wird, sodass die Transportabmaße verkleinert werden können.

Darüber hinaus kann vorgesehen sein, dass der Einstellmechanismus als Koppelmechanismus ausgebildet ist, welcher derart mit einem Hauptrahmen oder einem Klapparm der Rahmenkonstruktion gekoppelt ist, dass in einer angehobenen Stellung des Klapparmes die erste Striegelträgererweiterung näher an den ersten Striegelträger herangeschoben ist, als in einer abgelassenen Stellung des Klapparmes. Dies bringt den Vorteil mit sich, dass mittels des Einstellmechanismus die Position der Striegelträgererweiterung in Querrichtung automatisiert und abhängig von der Stellung des Klapparmes verstellt werden kann und somit eine Anpassung der Position der Striegelträgererweiterung relativ zum Striegelträger ermöglicht wird.

Vorteilhaft ist auch eine Ausprägung, gemäß welcher vorgesehen sein kann, dass die erste Striegelträgererweiterung in der Querrichtung mehrere nebeneinander angeordnete Sicherungslöcher aufweist, sodass die erste Striegelträgererweiterung in der Querrichtung in verschiedenen Positionen am ersten Striegelträger fixiert werden kann. Dies bringt den Vorteil mit sich, dass durch diese Maßnahme die Position der Striegelträgererweiterung relativ zum Striegelträger eingestellt werden kann.

Gemäß einer Weiterbildung ist es möglich, dass die Verbindungskonstruktion, insbesondere die untere Verbindungsschiene, mittels einer Stützkonstruktion starr mit einem Hauptrahmen oder einem Klapparm der Rahmenkonstruktion gekoppelt ist. Dies bringt den Vorteil mit sich, dass durch diese Maßnahme die Verbindungskonstruktion zusätzliche Stabilität erlangen kann.

Ferner kann es zweckmäßig sein, wenn der erste Striegelzinken und der erste Erweiterungszinken formgleich ausgebildet sind. Dies bringt den Vorteil mit sich, dass durch diese Maßnahme die Anzahl an unterschiedlichen Bauteilen gering gehalten werden kann, sodass die landwirtschaftliche Bodenbearbeitungsmaschine insgesamt einen möglichst einfachen Aufbau aufweisen kann.

Mit anderen Worten ausgedrückt kann an den beiden äußeren Striegelfelder je eine zusätzliche Erweiterungsstruktur mitgeschraubt werden. Die Erweiterungsstruktur kann quer zur Fahrtrichtung mehrstufig in unterschiedlicher Position verschraubt werden. Je nach Position können auf diese Erweiterungsstruktur noch weitere Zinken verbaut werden. Somit kann die Gesamtbreite des Striegels noch verändert bzw. angepasst werden. Beispielsweise kann die Grundmaschine eine Arbeitsbreite von 11,88m aufweisen. Durch die Erweiterungsstruktur können noch je Seite 2 Zinken in Form einer Erweiterung an 2 Zinkenreihen, verbaut werden. Dies führt zu einer Arbeitsbreite von 11,88m + 6cm + 6cm = 12,00m. Somit kann eine Arbeitsbreite von 12m realisiert werden, ohne Änderungen am Grundgerät vornehmen zu müssen.

So ist es beispielsweise auch denkbar, dass die Maschine durch Zusatzzinken an allen 6 Zinkenreihen sehr einfach auf 12,24m Arbeitsbreite erweitert werden könnte, falls der Kunde eine Überlappung bzw. Mehrbreite wünscht.

Die landwirtschaftliche Bodenbearbeitungsmaschine kann als Grünlandstriegel oder auch als Hackstriegel ausgeführt sein. Wobei ein Hackstriegel auch sogenannte Schwerstriegel, Ackerstriegel oder dergleichen beinhaltet und umfasst. Die landwirtschaftliche Bodenbearbeitungsmaschine kann insbesondere zur mechanischen Unkrautbekämpfung eingesetzt werden.

Die landwirtschaftliche Bodenbearbeitungsmaschine kann als eine an einem Zugfahrzeug angebaute bzw. anbaubare landwirtschaftliche Bodenbearbeitungsmaschine ausgeführt sein. Der Rahmenkonstruktion kann hierfür eine sogenannte 3-Punkt-Anhängung zugeordnet sein. Es wären jedoch auch andere Formen der Anhängung denkbar sowie andere Ausführungsvarianten von landwirtschaftlichen Bodenbearbeitungsmaschinen denkbar. Beispielsweise ein Fahrwerk aufweisende gezogene landwirtschaftliche Bodenbearbeitungsmaschinen oder selbstfahrende landwirtschaftliche Bodenbearbeitungsmaschinen. Die landwirtschaftliche Bodenbearbeitungsmaschine könnte zudem als eine autonome, wie etwa teilautonom oder vollautonom betriebene landwirtschaftliche Bodenbearbeitungsmaschine ausgeführt sein.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht eines ersten Ausführungsbeispiels einer landwirtschaftlichen Bodenbearbeitungsmaschine;
- Fig. 2: eine perspektivische Ansicht eines ersten Ausführungsbeispiels eines Striegelfeldes der landwirtschaftlichen Bodenbearbeitungsmaschine;
- Fig. 3: eine weitere perspektivische Ansicht des ersten Ausführungsbeispiels des Striegelfeldes der landwirtschaftlichen Bodenbearbeitungsmaschine;
- Fig. 4: eine perspektivische Ansicht des ersten Ausführungsbeispiels des Striegelfeldes der landwirtschaftlichen Bodenbearbeitungsmaschine, wie diese in Fig. 2 dargestellt ist, jedoch mit zusätzlich angebauten Erweiterungszinken;
- Fig. 5: eine schematische Schnittdarstellung im Bereich Striegelträger/ Striegelträgererweiterung eines zweiten Ausführungsbeispiels eines Striegelfeldes der landwirtschaftlichen Bodenbearbeitungsmaschine;
- Fig. 6: eine schematische Seitenansicht im Bereich Striegelträger/ Striegelträgererweiterung eines dritten Ausführungsbeispiels eines Striegelfeldes der landwirtschaftlichen Bodenbearbeitungsmaschine;
- Fig. 7: eine Rückansicht eines vierten Ausführungsbeispiels eines Striegelfeldes der landwirtschaftlichen Bodenbearbeitungsmaschine.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

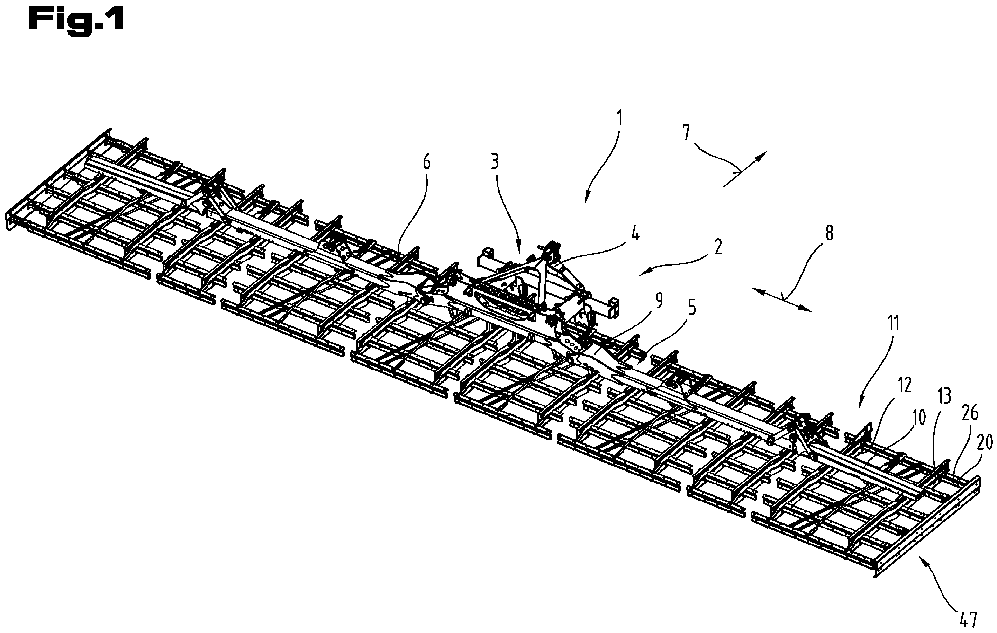

Fig. 1 zeigt ein erstes Ausführungsbeispiel einer landwirtschaftlichen Bodenbearbeitungsmaschine 1. Insbesondere kann vorgesehen sein, dass die landwirtschaftliche Bodenbearbeitungsmaschine 1 als Striegel 1 ausgebildet ist.

Die landwirtschaftliche Bodenbearbeitungsmaschine 1 umfasst eine Rahmenkonstruktion 2, welche als Träger für die eigentlichen, in der Fig. 1 nicht dargestellten, Bodenbearbeitungswerkzeuge in Form von Striegel dienen kann. Die Rahmenkonstruktion 2 kann mehrere Bauteile bzw. mehrere Bauteilebenen aufweisen.

Insbesondere kann vorgesehen sein, dass die Rahmenkonstruktion 2 einen Hauptrahmen 3 umfasst. Der Hauptrahmen 3 kann zum Ankuppeln der landwirtschaftlichen Bodenbearbeitungsmaschine 1 an ein Zugfahrzeug dienen. Das Zugfahrzeug ist hierbei nicht dargestellt. Insbesondere kann vorgesehen sein, dass der Hauptrahmen 3 eine sogenannte 3-Punkt-Anhängung 4 umfasst, mittels welcher die landwirtschaftliche Bodenbearbeitungsmaschine 1 an das Zugfahrzeug gekoppelt werden kann.

Weiters kann vorgesehen sein, dass mit dem Hauptrahmen 3 ein erster Klapparm 5 und ein zweiter Klapparm 6 gekoppelt sind.

Die 3-Punkt- Anhängung 4 kann in einer Bearbeitungsrichtung 7 vorne an der Rahmenkonstruktion 2 angeordnet sein. Der erste Klapparm 5 und der zweite Klapparm 6 können sich in einer Querrichtung 8 vom Hauptrahmen 3 weg erstrecken. Wie der Name schon sagt, können der erste Klapparm 5 und der zweite Klapparm 6 klappbar bzw. schwenkbar am Hauptrahmen 3 angeordnet sein. Durch die Klapparme 5, 6 können die Außenabmaße der landwirtschaftliche Bodenbearbeitungsmaschine 1 verändert werden und die landwirtschaftliche Bodenbearbeitungsmaschine 1 somit zwischen einer Transportstellung und einer Bearbeitungsstellung modifiziert werden. Im vorliegenden Ausführungsbeispiel kann vorgesehen sein, dass der erste Klapparm 5 bezüglich der Bearbeitungsrichtung 7 an der rechten Seite der landwirtschaftlichen Bodenbearbeitungsmaschine 1 angeordnet ist und dass der zweite Klapparm 6 bezüglich der Bearbeitungsrichtung 7 an der linken Seite der landwirtschaftliche Bodenbearbeitungsmaschine 1 angeordnet ist.

Weiters kann vorgesehen sein, dass ein oder mehrere nicht dargestellte und auch nicht näher beschriebene Stützräder mit der Rahmenkonstruktion 2 gekoppelt sind.

Insbesondere kann vorgesehen sein, dass die landwirtschaftliche Bodenbearbeitungsmaschine 1 bzw. die Klapparme 5, 6 und die daran angebauten Bauteile bezüglich einer Querrichtungsmitte einen symmetrischen bzw. spiegelgleichen Aufbau aufweisen. Aufgrund des symmetrischen Aufbaus der landwirtschaftlichen Bodenbearbeitungsmaschine 1 wird der Einfachheit halber in weiterer Folge und auch in den weiteren Figuren nur der Aufbau einer ersten Seite der landwirtschaftliche Bodenbearbeitungsmaschine 1 bzw. des ersten Klapparmes 5 der landwirtschaftliche Bodenbearbeitungsmaschine 1 und der daran angebauten Bauteile beschrieben.

Wie aus Fig. 1 ersichtlich, kann vorgesehen sein, dass der erste Klapparm 5 einen inneren Klapparmteil 9 umfasst, welcher mit dem Hauptrahmen 3 gekoppelt ist. Weiters kann vorgesehen sein, dass der erste Klapparm 5 einen äußeren Klapparmteil 10 umfasst, welcher mit dem inneren Klapparmteil 9 gekoppelt sein kann. Insbesondere kann vorgesehen sein, dass der äußere Klapparmteil 10 relativ zum inneren Klapparmteil 9 verschwenkbar ausgebildet ist. Im Hinblick auf die Bearbeitungsrichtung 7 bzw. die Querrichtung 8 können der innere Klapparmteil 9 und der äußere Klapparmteil 10 jeweils nach oben verschwenkt werden. Somit können die Klapparmteile 9, 10 oberhalb des Hauptrahmens 3 platziert werden, um die Transportabmaße der landwirtschaftliche Bodenbearbeitungsmaschine 1 zu verkleinern. Insbesondere kann vorgesehen sein, dass zwischen dem Hauptrahmen 3 und dem inneren Klapparmteil 9 ein Aktuator, wie etwa ein Hydraulikzylinder wirkt, welcher zur Positionierung des inneren Klapparmteils 9 relativ zum Hauptrahmenteil 3 dient.

Weiters kann vorgesehen sein, dass zwischen dem inneren Klapparmteil 9 und dem äußeren Klapparmteil 10 ebenfalls ein Aktuator, insbesondere ein Hydraulikzylinder ausgebildet ist, welcher zum aktiven Positionieren des äußeren Klapparmteils 10 relativ zum inneren Klapparmteil 9 dient.

Weiters kann vorgesehen sein, dass die Rahmenkonstruktion 2 mehrere Striegelfeldrahmen 11 umfasst. Insbesondere kann vorgesehen sein, dass einzelne Striegelfeldrahmen 11 baugleich oder symmetrisch zueinander ausgebildet sind. Insbesondere kann vorgesehen sein, dass die Striegelfeldrahmen 11 an den Klapparmen 5, 6, insbesondere an Klapparmteilen 9, 10 angeordnet sind bzw. von diesen getragen werden. Durch die Striegelfeldrahmen 11 können einzelne Striegelfelder definiert werden.

Wie aus Fig. 1 ersichtlich, kann vorgesehen sein, dass am äußeren Klapparmteil 10 ein einzelner Striegelfeldrahmen 11 angeordnet ist.

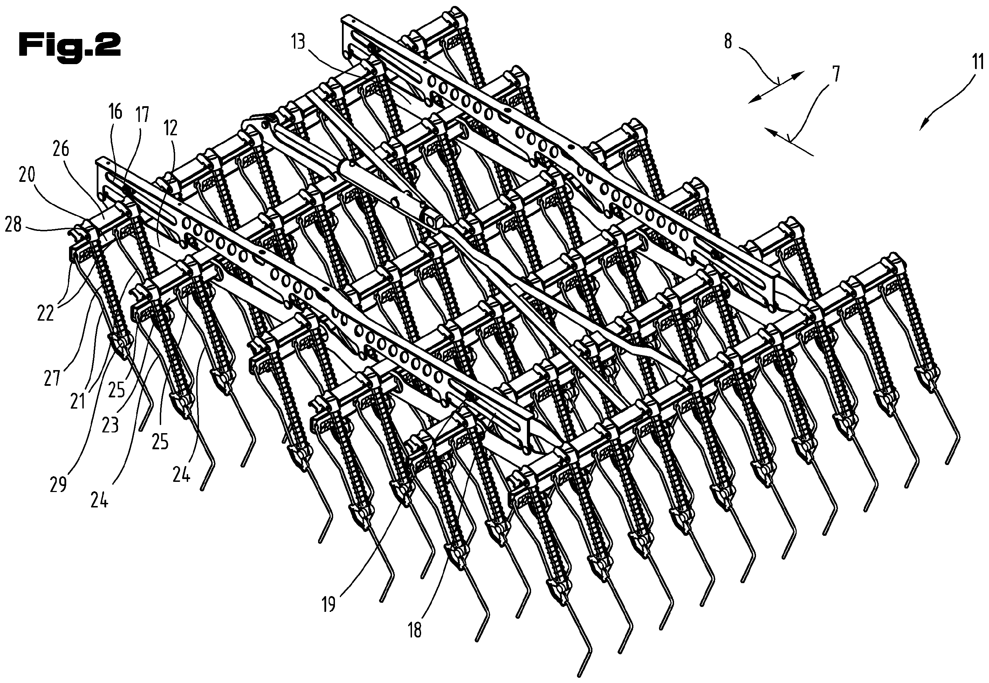

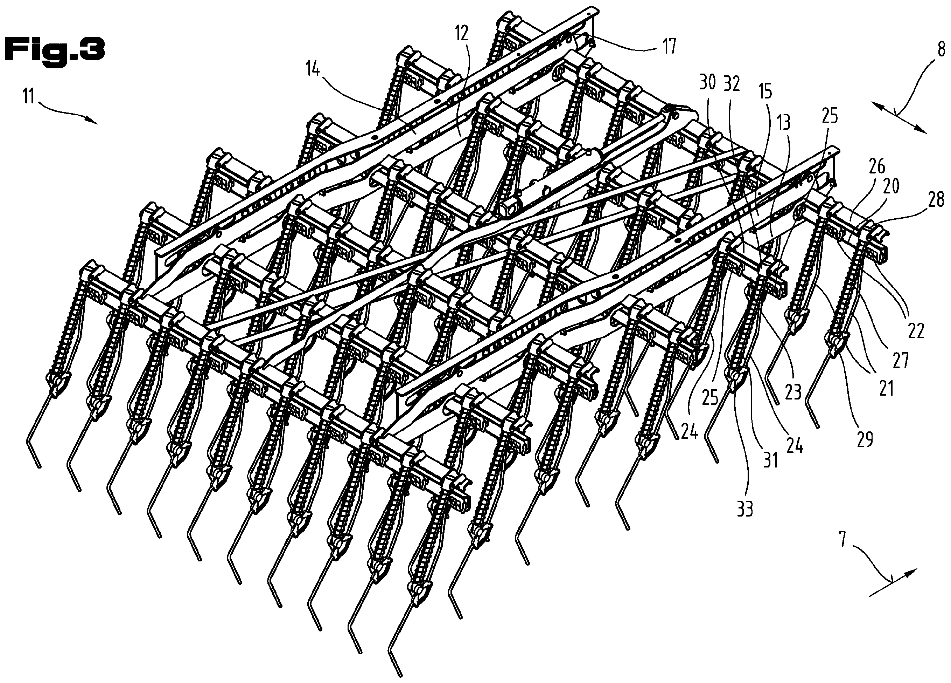

Dieser einzelne Striegelfeldrahmen 11 ist der Übersichtlichkeit halber in den Fig. 2 und 3 in einem ersten Ausführungsbeispiel in zwei unterschiedlichen perspektivischen Stellungen dargestellt.

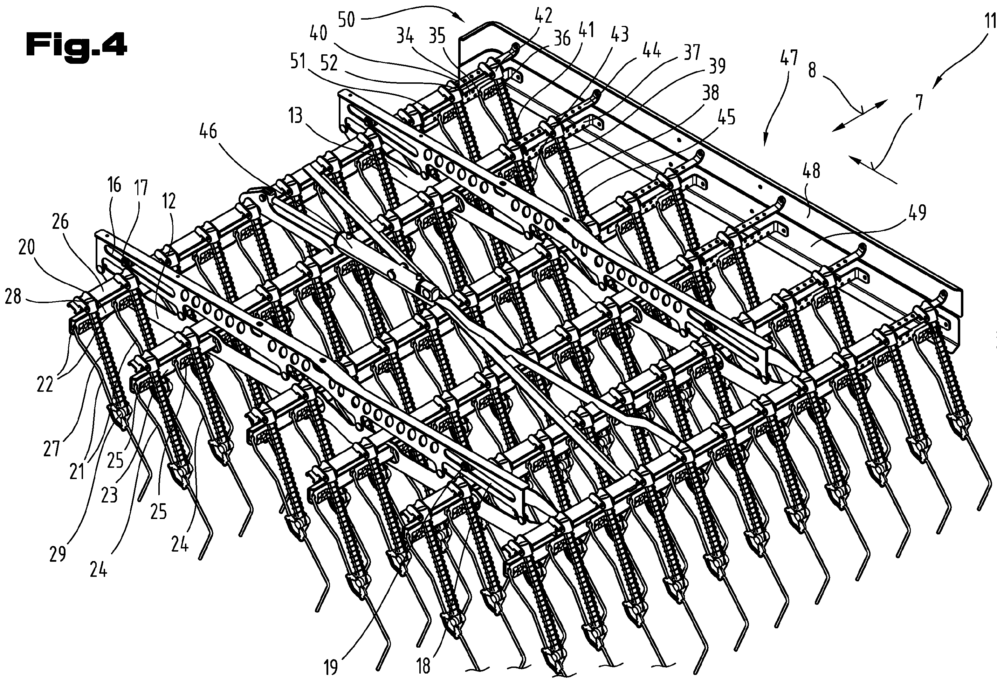

In der Fig. 4 ist ebenfalls das erste Ausführungsbeispiel des Striegelfeldrahmens 11 dargestellt, wobei in der Fig. 4, gleich wie in der Fig. 1, die in weiterer Folge noch näher beschriebenen Striegelträgererweiterungen angebaut bzw. dargestellt und ersichtlich sind.

Die weitere Beschreibung der landwirtschaftlichen Bodenbearbeitungsmaschine 1 erfolgt anhand des ersten Ausführungsbeispiels der Fig. 1 bis 4, wobei wiederum für gleiche Teile gleiche Bezugszeichen bzw. Bauteilbezeichnungen wie in den jeweils vorangegangenen Figuren verwendet werden. Um unnötige Wiederholungen zu vermeiden, wird auf die detaillierte Beschreibung in den jeweils vorangegangenen Figuren hingewiesen bzw. Bezug genommen.

Wie besonders gut aus den Fig. 2 bis 4 ersichtlich, kann vorgesehen sein, dass der Striegelfeldrahmen 11 eine innere Striegelträgeraufnahme 12 und eine äußere Striegelträgeraufnahme 13 umfasst. Die innere Striegelträgeraufnahme 12 und die äußere Striegelträgeraufnahme 13 können in der Querrichtung 8 zueinander beabstandet angeordnet sein. Insbesondere kann vorgesehen sein, dass sich die innere Striegelträgeraufnahme 12 und die äußere Striegelträgeraufnahme 13 in der Bearbeitungsrichtung 7 erstrecken.

Weiters kann vorgesehen sein, dass eine innere Druckfederträgeraufnahme 14 ausgebildet ist und dass eine äußere Druckfederträgeraufnahme 15 ausgebildet ist. Die innere Druckfederträgeraufnahme 14 kann relativ zur inneren Striegelträgeraufnahme 12 an dieser verschiebbar gelagert sein.

Insbesondere kann vorgesehen sein, dass an der inneren Striegelträgeraufnahme 12 eine vordere Führungsausnehmung 16 ausgebildet ist, wie diese besonders gut aus Fig. 2 ersichtlich ist.

Weiters kann vorgesehen sein, dass mit der inneren Druckfederträgeraufnahme 14 eine vordere Führungsrolle 17 gekoppelt ist, welche in der vorderen Führungsausnehmung 16 verschiebbar aufgenommen ist.

Weiters kann vorgesehen sein, dass an der inneren Striegelträgeraufnahme 12 eine hintere Führungsausnehmung 18 ausgebildet ist, wie diese besonders gut aus Fig. 2 ersichtlich ist.

Weiters kann vorgesehen sein, dass mit der inneren Druckfederträgeraufnahme 14 eine hintere Führungsrolle 19 gekoppelt ist, welche in der hinteren Führungsausnehmung 18 verschiebbar aufgenommen ist.

Die äußere Druckfederträgeraufnahme 15 kann mittels eines ähnlichen Mechanismus an der äußeren Striegelträgeraufnahme 13 verschiebbar aufgenommen sein.

Weiters kann vorgesehen sein, dass ein erster Striegelträger 20 ausgebildet ist, welcher an der inneren Striegelträgeraufnahme 12 bzw. an der äußeren Striegelträgeraufnahme 13 aufgenommen sein kann. Insbesondere kann vorgesehen sein, dass der erste Striegelträger 20 starr an der inneren Striegelträgeraufnahme 12 bzw. an der äußeren Striegelträgeraufnahme 13 aufgenommen ist. Weiters kann vorgesehen sein, dass sich der erste Striegelträger 20 in Querrichtung 8 erstreckt. Insbesondere kann vorgesehen sein, dass der erste Striegelträger 20 in Form eines U-Profils ausgebildet ist.

Weiters kann vorgesehen sein, dass am ersten Striegelträger 20 in der Querrichtung 8 zueinander beabstandet mehrere erste Striegelzinken 21 angeordnet sind. Insbesondere kann vorgesehen sein, dass die ersten Striegelzinken 21 relativ zum ersten Striegelträger 20 verschwenkbar an diesem angeordnet sind. Insbesondere kann hierbei vorgesehen sein, dass jeder der ersten Striegelzinken 21 jeweils mittels einer eigenen ersten Zinkenhalterung 22 schwenkbar mit dem ersten Striegelträger 20 gekoppelt ist. Insbesondere kann vorgesehen sein, dass eine große Anzahl an ersten Striegelzinken 21 in der Querrichtung 8 zueinander beabstandet am ersten Striegelträger 20 aufgenommen ist.

Weiters kann vorgesehen sein, dass ein zweiter Striegelträger 23 ausgebildet ist, welcher zur Aufnahme der zweiten Striegelzinken 24 dient, welcher mit zweiten Zinkenhalterungen 25 am zweiten Striegelträger 23 gehalten werden. Der Aufbau des zweiten Striegelträgers 23 kann mutatis mutandis zum ersten Striegelträger 20 ausgebildet sein. Insbesondere kann vorgesehen sein, dass der zweite Striegelträger 23 in Bearbeitungsrichtung 7 hinter dem ersten Striegelträger 20 angeordnet ist. Weiters kann vorgesehen sein, dass der zweite Striegelträger 23 zum ersten Striegelträger 20 in der Querrichtung 8 versetzt angeordnet ist, sodass die ersten Striegelzinken 21 und die zweiten Striegelzinken 24 jeweils in der Querrichtung 8 versetzt zueinander angeordnet sind.

Weiters kann vorgesehen sein, dass hinter dem ersten Striegelträger 20 und dem zweiten Striegelträger 23 weitere gleich aufgebaute Striegelträger angeordnet sind. Im vorliegenden Ausführungsbeispiel sind insgesamt sechs der Striegelträger hintereinander angeordnet. Auch die weiteren Striegelträger können jeweils versetzt zum ersten Striegelträger 20 und zum zweiten Striegelträger 23 angeordnet sein, sodass jeweils die in der Bearbeitungsrichtung 7 hintereinander angeordneten Striegelzinken in der Querrichtung 8 nebeneinander angeordnet sind.

Weiters kann vorgesehen sein, dass ein erster Druckfederträger 26 ausgebildet ist, welcher an der inneren Druckfederträgeraufnahme 14 und an der äußeren Druckfederträgeraufnahme 15 angeordnet sein kann. Insbesondere kann vorgesehen sein, dass der erste Druckfederträger 26 starr mit der inneren Druckfederträgeraufnahme 14 und der äußeren Druckfederträgeraufnahme 15 gekoppelt ist. Durch die Verschiebbarkeit der inneren Druckfederträgeraufnahme 14 und der äußeren Druckfederträgeraufnahme 15 kann der erste Druckfederträger 26 relativ zum ersten Striegelträger 20 verschiebbar ausgebildet sein. Die Verschiebung des ersten Druckfederträgers 26 relativ zum ersten Striegelträger 20 kann hierbei hauptsächlich in der Bearbeitungsrichtung 7 erfolgen.

Weiters kann vorgesehen sein, dass die erste Druckfeder 27 mittels einer ersten Druckfederhalterung 28 schwenkbar mit dem ersten Druckfederträger 26 gekoppelt ist. Weiters kann vorgesehen sein, dass die erste Druckfeder 27 mittels eines ersten Zinkenanschlusses 29 schwenkbar mit dem ersten Striegelzinken 21 gekoppelt ist. Insbesondere kann vorgesehen sein, dass für jeden der ersten Striegelzinken 21 eine eigene erste Druckfeder 27 ausgebildet ist. Mittels der ersten Druckfeder 27 kann der erste Striegelzinken 21 an den Untergrund angepresst werden. Durch das Vorsehen einer eigenen ersten Druckfeder 27 für jeden der ersten Striegelzinken 21 kann jener der ersten Striegelzinken 21 einzeln und unabhängig voneinander einem Hindernis bzw. einer Bodenunebenheit ausweichen.

Wie auch die ersten Striegelzinken 21 können die ersten Druckfedern 27 in der Querrichtung 8 zueinander beabstandet nebeneinander am ersten Druckfederträger 26 angeordnet sein.

Weiters kann vorgesehen sein, dass in der Bearbeitungsrichtung 7 hinter dem ersten Druckfederträger 26 ein zweiter Druckfederträger 30 ausgebildet ist, welcher zur Aufnahme von zwei Druckfedern 31 dient. Die zweiten Druckfedern 31 können mittels einer zweiten Druckfederhalterung 32 mit dem zweiten Druckfederträger 30 gekoppelt sein. Weiters können die zweiten Druckfedern 31 mittels eines zweiten Zinkenanschlusses 33 mit dem zweiten Striegelzinken 24 gekoppelt sein. Die zweiten Druckfedern 31 können mutatis mutandis zu den ersten Druckfedern 27 ausgebildet sein.

Anhand der Fig. 4 wird nun eine mögliche Erweiterung bzw. Verbreiterung der landwirtschaftliche Bodenbearbeitungsmaschine 1 beschrieben.

Wie aus Fig. 4 ersichtlich, kann vorgesehen sein, dass eine erste Striegelträgererweiterung 34 ausgebildet ist, an welcher ein erster Erweiterungszinken 35 angeordnet ist. Insbesondere kann vorgesehen sein, dass der erste Erweiterungszinken 35 mittels einer ersten Erweiterungszinkenhalterung 36 schwenkbar an der ersten Striegelträgererweiterung 34 angeordnet ist. Insbesondere kann vorgesehen sein, dass die erste Striegelträgererweiterung 34 mit dem ersten Striegelträger 20 gekoppelt ist. Die erste Striegelträgererweiterung 34 kann somit die Verlängerung des ersten Striegelträgers 20 bilden. Insbesondere kann vorgesehen sein, dass die erste Striegelträgererweiterung 34 über den ersten Striegelträger 20 starr an der inneren Striegelträgeraufnahme 12 bzw. an der äußeren Striegelträgeraufnahme 13 gekoppelt ist. Insbesondere kann vorgesehen sein, dass die erste Striegelträgererweiterung 34 durch ein Flacheisen gebildet wird.

Weiters kann vorgesehen sein, dass eine zweite Striegelträgererweiterung 37 ausgebildet ist, an welcher ein zweiter Erweiterungszinken 38 angeordnet sein kann. Insbesondere kann vorgesehen sein, dass der zweite Erweiterungszinken 38 mittels einer zweiten Erweiterungszinkenhalterung 39 schwenkbar an der zweiten Striegelträgererweiterung 37 angeordnet ist. Insbesondere kann vorgesehen sein, dass die zweite Striegelträgererweiterung 37 über den zweiten Striegelträger 23 starr an der inneren Striegelträgeraufnahme 12 bzw. an der äußeren Striegelträgeraufnahme 13 gekoppelt ist. Insbesondere kann vorgesehen sein, dass die zweite Striegelträgererweiterung 37 durch ein Flacheisen gebildet wird.

Weiters kann vorgesehen sein, dass eine erste Druckfederträgererweiterung 40 ausgebildet ist, an welcher eine erste Erweiterungsdruckfeder 41 angeordnet ist.

Insbesondere kann vorgesehen sein, dass erste Druckfederträgererweiterung 40 über den ersten Druckfederträger 26 starr mit der inneren Druckfederträgeraufnahme 14 und der äußeren Druckfederträgeraufnahme 15 gekoppelt ist. Durch die Verschiebbarkeit der inneren Druckfederträgeraufnahme 14 und der äußeren Druckfederträgeraufnahme 15 kann die erste Druckfederträgererweiterung 40 relativ zur ersten Striegelträgererweiterung 34 verschiebbar ausgebildet sein. Die Verschiebung der ersten Druckfederträgererweiterung 40 relativ zur ersten Striegelträgererweiterung 34 kann hierbei hauptsächlich in der Bearbeitungsrichtung 7 erfolgen.

Weiters kann vorgesehen sein, dass die erste Erweiterungsdruckfeder 41 mittels einer ersten Erweiterungsdruckfederhalterung 42 schwenkbar mit der ersten Druckfederträgererweiterung 40 gekoppelt ist. Weiters kann vorgesehen sein, dass die erste Erweiterungsdruckfeder 41 mittels eines ersten Erweiterungszinkenanschlusses 43 schwenkbar mit der ersten Druckfederträgererweiterung 40 gekoppelt ist. Insbesondere kann vorgesehen sein, dass für jeden der ersten Erweiterungszinken 35 eine eigene erste Erweiterungsdruckfeder 41 ausgebildet ist. Mittels der ersten Erweiterungsdruckfeder 41 kann der erste Erweiterungszinken 35 an den Untergrund angepresst werden. Durch das Vorsehen einer eigenen ersten Erweiterungsdruckfeder 41 für jeden der ersten Erweiterungszinken 35 kann jener der ersten Erweiterungszinken 35 einzeln und unabhängig voneinander einem Hindernis bzw. einer Bodenunebenheit ausweichen.

Weiters kann vorgesehen sein, dass ein Anpressdruckaktor 46 ausgebildet ist, mittels welchem die Position der Druckfederträger 26, 30 bzw. der Druckfederträgererweiterungen 40, 44 einstellbar ist und somit der Anpressdruck der Druckfedern 27, 31 bzw. der Erweiterungsdruckfedern 41, 45 auf die jeweils damit gekoppelten Striegelzinken 21, 24 bzw. Erweiterungszinken 35, 38 einstellbar ist.

Weiters kann vorgesehen sein, dass die einzelnen Striegelträgererweiterungen 34, 37 bzw. die einzelnen Druckfederträgererweiterungen 40, 44 jeweils an deren Außenseite mit einer Verbindungskonstruktion 47 gekoppelt sind.

Insbesondere kann vorgesehen sein, dass die Verbindungskonstruktion 47 eine obere Verbindungsschiene 48 aufweist. Die einzelnen Druckfederträgererweiterungen 40, 44 können mit der oberen Verbindungsschiene 48 gekoppelt sein. Insbesondere kann vorgesehen sein, dass die einzelnen Druckfederträgererweiterungen 40, 44 im Anschlussbereich an die obere Verbindungsschiene 48 L-förmig gebogen sind und mittels einer Schraubverbindung mit der oberen Verbindungsschiene 48 gekoppelt sind.

Weiters kann vorgesehen sein, dass die Verbindungskonstruktion 47 eine untere Verbindungsschiene 49 aufweist. Insbesondere kann vorgesehen sein, dass die einzelnen Striegelträgererweiterungen 34, 37 an deren von den Striegelträgern 20, 23 abgewandten Ende mit der unteren Verbindungsschiene 49 gekoppelt sind. Insbesondere kann vorgesehen sein, dass die Striegelträgererweiterungen 34, 37 im Koppelbereich mit der unteren Verbindungsschiene 49 L-förmig ausgebildet sind und mittels einer Schraubverbindung mit der unteren Verbindungsschiene 49 gekoppelt sind.

Weiters kann vorgesehen sein, dass ein Anfahrschutz 50 ausgebildet ist, welcher in Bearbeitungsrichtung 7 vorne an der Verbindungskonstruktion 47 ausgebildet ist bzw. an dieser angeordnet ist. Insbesondere kann vorgesehen sein, dass die obere Verbindungsschiene 48 und/oder die untere Verbindungsschiene 49 an deren vorderen Ende nach innen gebogen sind, sodass der Anfahrschutz 50 realisiert werden kann.

In einer alternativen, nicht dargestellten Ausführungsvariante ist es auch denkbar, dass der Anfahrschutz 50 als eigenständiges Bauteil ausgebildet ist. Hierbei kann vorgesehen sein, dass an der oberen Verbindungsschiene 48 ein eigenes Anfahrschutzbauteil angeordnet ist und dass an der unteren Verbindungsschiene 49 ein eigenes Anfahrschutzbauteil angeordnet ist. Wenn der Anfahrschutz 50 als eigenständiges Bauteil ausgebildet ist, kann dieser beispielsweise mittels einer Schraubverbindung mit der jeweiligen Verbindungsschiene 48, 49 gekoppelt sein.

Weiters kann vorgesehen sein, dass die erste Striegelträgererweiterung 34 mittels Schrauben 51 mit dem ersten Striegelträger 20 gekoppelt ist. Insbesondere kann hierbei vorgesehen sein, dass an der ersten Striegelträgererweiterung 34 mehrere in der Querrichtung 8 zueinander beabstandete Sicherungslöcher 52 ausgebildet sind, durch welche die Schrauben 51 hindurch gesteckt werden können. Die Sicherungslöcher 52 können hierbei so an der Striegelträgererweiterung 34 verteilt angeordnet sein, dass die erste Striegelträgererweiterung 34 wahlweise in unterschiedlichen Positionen mit dem ersten Striegelträger 20 gekoppelt werden kann. Insbesondere kann vorgesehen sein, dass die erste Striegelträgererweiterung 34 durch ein Flacheisen gebildet ist.

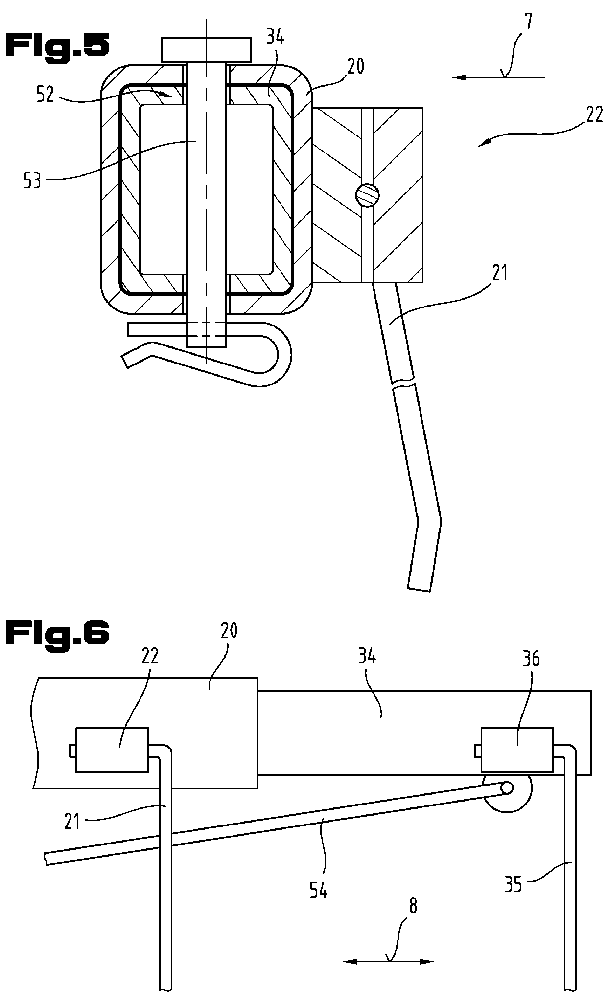

In der Fig. 5 ist eine zweite und gegebenenfalls für sich eigenständige Ausführungsform der ersten Striegelträgererweiterung 34 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Fig. 5 zeigt ein weiteres Ausführungsbeispiel der Verbindung zwischen der ersten Striegelträgererweiterung 34 und dem ersten Striegelträger 20. Wie aus Fig. 5 ersichtlich, kann vorgesehen sein, dass die erste Striegelträgererweiterung 34 in dem ersten Striegelträger 20 eingeschoben ist. Insbesondere kann vorgesehen sein, dass die erste Striegelträgererweiterung 34 bzw. der erste Striegelträger 20 jeweils durch ein Formrohr gebildet sind, welche ineinander schiebbar sind. Insbesondere kann hierbei vorgesehen sein, dass das Formrohr einen rechteckigen oder einen quadratischen Querschnitt aufweist. Durch Verwendung eines Formrohres mit einem nicht-runden Querschnitt kann eine Drehmomentensicherung erreicht werden.

Weiters kann vorgesehen sein, dass, wie schon im ersten Ausführungsbeispiel beschrieben, mehrere Sicherungslöcher 52 in der Querrichtung 8 zueinander beabstandet angeordnet sind, in welche ein Sicherungselement 53 einsetzbar ist. Mittels des Sicherungselementes 53 kann die erste Striegelträgererweiterung 34 gegen eine Verschiebung in der Querrichtung 8 relativ zum ersten Striegelträger 20 gesichert werden. Insbesondere kann vorgesehen sein, dass das Sicherungselement 53 als Bolzen ausgebildet ist, welcher mittels eines Federsteckers gesichert ist. Natürlich ist es auch denkbar, dass zur Sicherung des Steckbolzens ein Klappsplint verwendet wird. Weiters ist es auch denkbar, dass anstatt des Steckbolzens direkt ein Klappsplint verwendet wird.

In der Fig. 6 ist eine dritte und gegebenenfalls für sich eigenständige Ausführungsform der landwirtschaftlichen Bodenbearbeitungsmaschine 1 gezeigt, wobei wiederum für gleiche Teile gleiche Bezugszeichen bzw. Bauteilbezeichnungen wie in den vorangegangenen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

Wie aus Fig. 6 ersichtlich, kann vorgesehen sein, dass gleich wie im zweiten Ausführungsbeispiel nach Fig. 5, die erste Striegelträgererweiterung 34 in Querrichtung zum ersten Striegelträger 20 verschiebbar ist. Dies kann beispielsweise durch zwei ineinander verschiebbare Formrohre erfolgen.

Anstatt des Vorsehen eines Sicherungselementes 53, wie dies in Fig. 5 der Fall ist, kann ein Einstellmechanismus 54 ausgebildet sein, mittels welchem die Position der ersten Striegelträgererweiterung 34 relativ zum ersten Striegelträger 20 in der Querrichtung 8 verstellbar sein kann. Der Einstellmechanismus 54 kann hierbei einen Aktuator umfassen, mittels welchem die Position aktiv verstellbar ist.

In einem weiteren Ausführungsbeispiel ist es auch denkbar, dass der Einstellmechanismus 54 eine Koppelkonstruktion umfasst, welche derart mit dem Hauptrahmen 3 bzw. mit dem ersten Klapparm 5 gekoppelt ist, sodass bei einem Hochklappen des ersten Klapparmes 5 relativ zum Hauptrahmen 3, die erste Striegelträgererweiterung 34 in den ersten Striegelträger 20 hineinverschoben wird. Dadurch können die Transportabmaße der landwirtschaftlichen Bodenbearbeitungsmaschine 1 möglichst gering gehalten werden. Der Maschinenbediener braucht hierbei zum Hineinverschieben der ersten Striegelträgererweiterung 34 in den ersten Striegelträger 20 beim Aufklappen des ersten Klapparmes 5 keinen gesonderten Befehl geben.

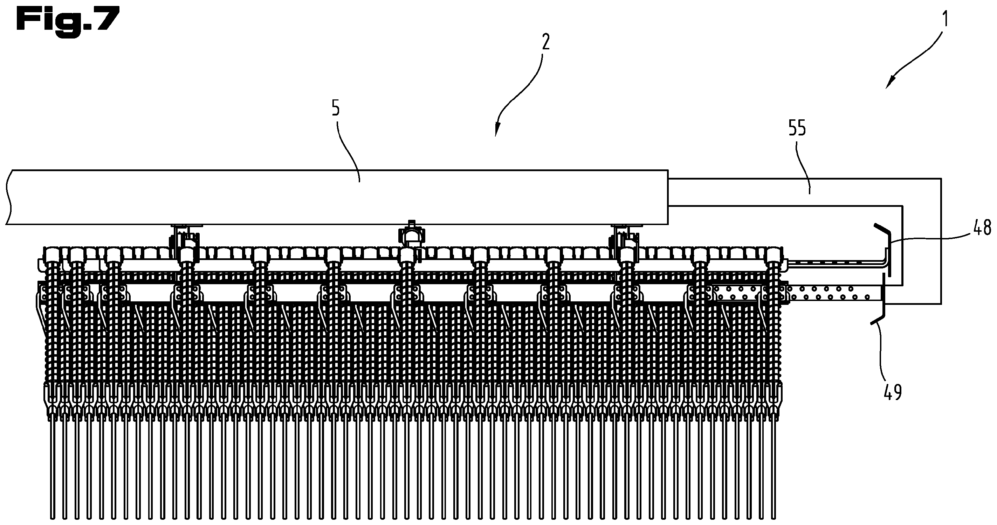

In der Fig. 7 ist eine vierte und gegebenenfalls für sich eigenständige Ausführungsform der landwirtschaftlichen Bodenbearbeitungsmaschine 1 gezeigt, wobei wiederum für gleiche Teile gleiche Bezugszeichen bzw. Bauteilbezeichnungen wie in den vorangegangenen Fig. 1 bis 6 verwendet werden. Um unnötige Wiederholungen zu vermeiden, wird auf die detaillierte Beschreibung in den vorangegangenen Fig. 1 bis 6 hingewiesen bzw. Bezug genommen.

Wie aus Fig. 7 ersichtlich, kann vorgesehen sein, dass die untere Verbindungsschiene 49 mittels einer Stützkonstruktion 55 starr mit dem ersten Klapparm 5 gekoppelt ist. Dies bringt den Vorteil mit sich, dass mittels der Stützkonstruktion 55 eine zusätzliche Stabilität der Striegelträgererweiterungen 33, 34 erreicht werden kann. Weiters kann vorgesehen sein, dass die Stützkonstruktion 55 gleichzeitig als Einstellmechanismus 54 dient.

Weiters kann vorgesehen sein, dass die Stützkonstruktion 55 an einer Außenfläche der unteren Verbindungsschiene 49 angeordnet ist. Die Stützkonstruktion 55 kann hierbei außen an der oberen Verbindungsschiene 48 vorbeigeführt sein, um die Verschiebbarkeit der Druckfederträgererweiterungen 40, 44 nicht zu blockieren.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Landwirtschaftliche Bodenbearbeitungsmaschine | 31 | zweite Druckfeder |
| | | 32 | zweite Druckfederhalterung |
| 2 | Rahmenkonstruktion | 33 | zweiter Zinkenanschluss |
| 3 | Hauptrahmen | 34 | erste Striegelträgererweiterung |
| 4 | 3-Punkt-Anhängung | 35 | erster Erweiterungszinken |
| 5 | erster Klapparm | 36 | erste Erweiterungszinkenhalterung |
| 6 | zweiter Klapparm | 37 | zweite Striegelträgererweiterung |
| 7 | Bearbeitungsrichtung | 38 | zweiter Erweiterungszinken |
| 8 | Querrichtung | 39 | zweite Erweiterungszinkenhalterung |
| 9 | innerer Klapparmteil | | |
| 10 | äußerer Klapparmteil | 40 | erste Druckfederträgererweiterung |
| 11 | Striegelfeldrahmen | 41 | erste Erweiterungsdruckfeder |
| 12 | innere Striegelträgeraufnahme | 42 | erste Erweiterungsdruckfederhalterung |
| 13 | äußere Striegelträgeraufnahme | | |
| 14 | innere Druckfederträgeraufnahme | 43 | erster Erweiterungszinkenanschluss |
| 15 | äußere Druckfederträgeraufnahme | | |
| 16 | vordere Führungsausnehmung | 44 | zweite Druckfederträgererweiterung |
| 17 | vordere Führungsrolle | | |
| 18 | hintere Führungsausnehmung | 45 | zweite Erweiterungsdruckfeder |
| 19 | hintere Führungsrolle | 46 | Anpressdruckaktor |
| 20 | erster Striegelträger | 47 | Verbindungskonstruktion |
| 21 | erster Striegelzinken | 48 | obere Verbindungsschiene |
| 22 | erste Zinkenhalterung | 49 | untere Verbindungsschiene |
| 23 | zweiter Striegelträger | 50 | Anfahrschutz |
| 24 | zweiter Striegelzinken | 51 | Schraube |
| 25 | zweite Zinkenhalterung | 52 | Sicherungsloch |
| 26 | erster Druckfederträger | 53 | Sicherungselement |
| 27 | erste Druckfeder | 54 | Einstellmechanismus |
| 28 | erste Druckfederhalterung | 55 | Stützkonstruktion |
| 29 | erster Zinkenanschluss | | |
| 30 | zweiter Druckfederträger | | |

## Patentansprüche

1. Landwirtschaftliche Bodenbearbeitungsmaschine (1), insbesondere Striegel (1), umfassend:
- eine Rahmenkonstruktion (2), welche eine Erstreckung in einer Bearbeitungsrichtung (7) und in einer Querrichtung (8) aufweist;
- einen ersten Striegelträger (20) mit mehreren in der Querrichtung (8) zueinander beabstandet angeordneten ersten Striegelzinken (21), wobei der erste Striegelträger (20) mit der Rahmenkonstruktion (2) gekoppelt ist;
**dadurch gekennzeichnet, dass**
eine erste Striegelträgererweiterung (34) mit zumindest einem ersten Erweiterungszinken (35) ausgebildet ist, wobei die erste Striegelträgererweiterung (34) in Verlängerung zum ersten Striegelträger (20) anordenbar ist.

2. Landwirtschaftliche Bodenbearbeitungsmaschine (1) nach Anspruch 1, **dadurch gekennzeichnet, dass** ein zweiter Striegelträger (23) mit mehreren in der Querrichtung (8) zueinander beabstandet angeordneten zweiten Striegelzinken (24) ausgebildet ist, wobei der zweite Striegelträger (23) mit der Rahmenkonstruktion (2) gekoppelt ist, wobei eine zweite Striegelträgererweiterung (37) mit zumindest einem zweiten Erweiterungszinken (38) ausgebildet ist, wobei die zweite Striegelträgererweiterung (37) in Verlängerung zum zweiten Striegelträger anordenbar ist, wobei im montierten Zustand der erste Erweiterungszinken (35) und der zweite Erweiterungszinken (38) in der Querrichtung (8) zueinander beabstandet angeordnet sind.

3. Landwirtschaftliche Bodenbearbeitungsmaschine (1) nach Anspruch 2, **dadurch gekennzeichnet, dass** die erste Striegelträgererweiterung (34) und die zweite Striegelträgererweiterung (37) mittels einer Verbindungskonstruktion (47) miteinander gekoppelt sind, wobei die Verbindungskonstruktion (47) an einer vom ersten Striegelträger (20) und zweiten Striegelträger (23) abgewandten Seite der ersten Striegelträgererweiterung (34) und der zweiten Striegelträgererweiterung (37) angeordnet ist.

4. Landwirtschaftliche Bodenbearbeitungsmaschine (1) nach einem der vorhergehenden Ansprüche, **dadurch gekennzeichnet, dass** ein erster Druckfederträger (26) mit mehreren in der Querrichtung (8) zueinander beabstandet angeordneten ersten Druckfedern (27) ausgebildet ist, wobei der erste Druckfederträger (26) mit der Rahmenkonstruktion (2) gekoppelt ist, wobei die ersten Druckfedern (27) jeweils mit einer der ersten Striegelzinken (21) gekoppelt sind,
wobei der erste Druckfederträger (26) relativ zum ersten Striegelträger (20) verschiebbar ist, um eine Vorspannung der ersten Druckfedern (27) einzustellen
und wobei eine erste Druckfederträgererweiterung (40) mit zumindest einer ersten Erweiterungsdruckfeder (41) ausgebildet ist, wobei die erste Erweiterungsdruckfeder (41) mit dem ersten Erweiterungszinken (35) gekoppelt ist, wobei die erste Druckfederträgererweiterung (40) in Verlängerung zum ersten Druckfederträger (26) anordenbar ist.

5. Landwirtschaftliche Bodenbearbeitungsmaschine (1) nach Anspruch 3 und 4, **dadurch gekennzeichnet, dass** die Verbindungskonstruktion (47) eine obere Verbindungsschiene (48) und eine untere Verbindungsschiene (49) umfasst, wobei die erste Striegelträgererweiterung (34) und die zweite Striegelträgererweiterung (37) mit der unteren Verbindungsschiene (49) gekoppelt sind und wobei die erste Druckfederträgererweiterung (40) und eine zweite Druckfederträgererweiterung (44) mit der oberen Verbindungsschiene (48) gekoppelt sind.

6. Landwirtschaftliche Bodenbearbeitungsmaschine (1) nach Anspruch 4 oder 5, **dadurch gekennzeichnet, dass** der erste Erweiterungszinken (35) mittels einer ersten Erweiterungszinkenhalterung (36) schwenkbar an der ersten Striegelträgererweiterung (34) angeordnet ist, wobei die erste Erweiterungsdruckfeder (41) in einem Abstand zu der ersten Erweiterungszinkenhalterung (36) mit dem ersten Erweiterungszinken (35) gekoppelt ist.

7. Landwirtschaftliche Bodenbearbeitungsmaschine (1) nach einem der Ansprüche 3 bis 6, **dadurch gekennzeichnet, dass** die Verbindungskonstruktion (47) an einem in Bearbeitungsrichtung (7) vorderen Ende, in der Querrichtung (8) zum ersten Striegelträger (20) gebogen oder gekantet ausgebildet ist oder dass
ein Anfahrschutz (50) ausgebildet ist, welcher an der Verbindungskonstruktion (47) an einem in Bearbeitungsrichtung (7) vorderen Ende angeordnet ist und, in der Querrichtung (8) zum ersten Striegelträger (20) gebogen oder gekantet ausgebildet ist.

8. Landwirtschaftliche Bodenbearbeitungsmaschine (1) nach einem der vorhergehenden Ansprüche, **dadurch gekennzeichnet, dass** die erste Striegelträgererweiterung (34) mittels Schrauben (51) mit dem ersten Striegelträger (20) gekoppelt ist.

9. Landwirtschaftliche Bodenbearbeitungsmaschine (1) nach einem der Ansprüche 1 bis 7, **dadurch gekennzeichnet, dass** die erste Striegelträgererweiterung (34) mittels einer formschlüssigen Steckverbindung mit dem ersten Striegelträger (20) gekoppelt ist und mittels eines werkzeuglos lösbaren Sicherungselementes (53) gegen eine Verschiebung in der Querrichtung (8) gesichert ist.

10. Landwirtschaftliche Bodenbearbeitungsmaschine (1) nach einem der Ansprüche 1 bis 7, **dadurch gekennzeichnet, dass** die erste Striegelträgererweiterung (34) mittels einer formschlüssigen Steckverbindung mit dem ersten Striegelträger (20) gekoppelt ist und mittels eines Einstellmechanismus (54) in der Querrichtung (8) verschiebbar gehalten ist.

11. Landwirtschaftliche Bodenbearbeitungsmaschine (1) nach Anspruch 10, **dadurch gekennzeichnet, dass** der Einstellmechanismus (54) als Koppelmechanismus ausgebildet ist, welcher derart mit einem Hauptrahmen (3) oder einem Klapparm (5, 6) der Rahmenkonstruktion (2) gekoppelt ist, dass in einer angehobenen Stellung des Klapparmes (5, 6) die erste Striegelträgererweiterung (34) näher an den ersten Striegelträger (20) herangeschoben ist, als in einer abgelassenen Stellung des Klapparmes (5, 6).

12. Landwirtschaftliche Bodenbearbeitungsmaschine (1) nach Anspruch 8 oder 9, **dadurch gekennzeichnet, dass** die erste Striegelträgererweiterung (34) in der Querrichtung (8) mehrere nebeneinander angeordnete Sicherungslöcher (52) aufweist, sodass die erste Striegelträgererweiterung (34) in der Querrichtung (8) in verschiedenen Positionen am ersten Striegelträger (20) fixiert werden kann.

13. Landwirtschaftliche Bodenbearbeitungsmaschine (1) nach einem der Ansprüche 3 bis 9, **dadurch gekennzeichnet, dass** die Verbindungskonstruktion (47), insbesondere die untere Verbindungsschiene (49), mittels einer Stützkonstruktion (55) starr mit einem Hauptrahmen (3) oder einem Klapparm (5, 6) der Rahmenkonstruktion (2) gekoppelt ist.

14. Landwirtschaftliche Bodenbearbeitungsmaschine (1) nach einem der vorhergehenden Ansprüche, **dadurch gekennzeichnet, dass** der erste Striegelzinken (21) und der erste Erweiterungszinken (35) formgleich ausgebildet sind.
